Europäisches Patentamt

European Patent Office

Office européen des brevets

(19)

(11) Veröffentlichungsnummer : **0 010 511**
**B1**

(12) EUROPÄISCHE PATENTSCHRIFT

(45) Veröffentlichungstag der Patentschrift :
23.12.81

(51) Int. Cl.³ : **A 01 D 90/10**

(21) Anmeldenummer : 79710005.4

(22) Anmeldetag : 21.08.79

(54) Landwirtschaftlich genutztes Fahrzeug, insbesondere ein Erntewagen.

(30) Priorität : 17.10.78 DE 2845093

(43) Veröffentlichungstag der Anmeldung :
30.04.80 (Patentblatt 80/09)

(45) Bekanntmachung des Hinweises auf die Patenterteilung : 23.12.81 Patentblatt 81/51

(84) Benannte Vertragsstaaten :
AT CH FR GB IT NL

(56) Entgegenhaltungen :
DE - A1 - 2 632 060
DE - A1 - 2 641 022
DE - U - 1 874 370
US - A - 2 344 317
US - A - 2 772 796
US - A - 2 991 863
US - A - 3 189 202
US - A - 3 275 176

(73) Patentinhaber : **Klöckner-Humboldt-Deutz AG Zweigniederlassung Fahr**

**D-7702 Gottmadingen (DE)**

(72) Erfinder : **Schaumburg, Willi**
**Im Bildstöckle 6**
**D-7702 Gottmadingen (DE)**
Erfinder : **Schildbach, Wolfgang**
**Schrotzburgstrasse 7**
**D-7702 Gottmadingen (DE)**

# Landwirtschaftlich genutztes Fahrzeug, insbesondere ein Erntewagen

Die Erfindung bezieht sich auf ein landwirtschaftlich genutztes Fahrzeug, insbesondere einen Erntewagen mit den Merkmalen nach dem Oberbegriff des Patentanspruchs 1.

Landwirtschaftlich genutzte Fahrzeuge der in Rede stehenden Gattung dienen dem Zweck, das Ladegut in dosierten Mengen entladen zu können. Dies ist vor allem dann von Bedeutung, wenn Nachfolgegeräte (z.B. Gebläse) beschickt werden müssen. Zum dosierten Entladen des Erntegutes ist mindestens eine, zwischen den seitlichen Wandungen des Wagens drehantreibbar gelagerte Dosierwalze vorgesehen. Das dem Laderaum im Zusammenwirken mit einem Kratzboden entnommene Erntegut wird einem, sich quer zur Fahrtrichtung erstreckenden Förderband aufgegeben und zur einen oder anderen Seite hin entladen. Um ein derartiges Fahrzeug, auch Erntewagen genannt, universeller einsetzen zu können, sind die Dosierwalzen in der Regel abnehmbar gelagert. Ebenfalls kann das Förderband in eine Nichtgebrauchslage überführt werden, so daß das Erntegut undosiert abgeladen werden kann. Derartige Wagen, auch « Ladewagen » genannt, sind in der Landtechnik weit verbreitet.

Eine Entladevorrichtung, bestehend aus den Dosierwalzen und dem Förderband, ist beispielsweise in der DE-OS 26 32 060 gezeigt und beschrieben. Bei der Inbetriebnahme derartiger Entladevorrichtungen kann es zu vorübergehenden Störungen in Form von Überlastungserscheinungen des Förderbandes kommen. Werden die Dosierwalzen in Drehung versetzt, gelangt eine relativ große Erntegutmenge auf das Förderband, das in diesem Fall durchrutschen kann.

Bei dem Erntewagen nach der DE-OS 26 41 022 erfolgt der Antrieb der Dosierwalzen und des Förderbandes von einer gemeinsamen Antriebswelle ausgehend. Eine schaltbare Kupplung dient dazu, die Dosierwalzen und das Förderband gleichzeitig in Betrieb zu nehmen bzw. abzuschalten. Der Kratzbodenantrieb dieses Erntewagens erfolgt über ein Schrittschaltwerk. In einer von mehreren Stellungen eines Stellhebels wird der Antrieb für den Kratzboden erst dann freigegeben, wenn die Dosierwalzen und das Förderband eingeschaltet sind bzw. wird zuerst der Kratzbodenantrieb unterbrochen, bevor die Dosierwalzen und das Förderband abgeschaltet werden. Mit dieser Anordnung lassen sich zwar unerwünscht hohe Drehmomentspitzen beim Zuschalten des Kratzbodenantriebs vermeiden, jedoch können Überlastungserscheinungen des Förderbandes nicht vermieden werden, da die Inbetriebnahme der Dosierwalzen und des Förderbandes gleichzeitig erfolgt.

Bei dem Universalwagen nach dem DE-GM 18 74 370 erfolgt der Antrieb der Dosierwalzen, des Förderbandes und des Kratzbodens unter Zwischenschaltung von schaltbaren Getrieben unabhängig voneinander, d.h. ohne jeglichen funktionellen Zusammenhang. Die tägliche Erfahrung lehrt, daß mit einer derartigen Anordnung Fehlbedienungen sehr häufig sind. Ein wirksamer Schutz des Förderbandes kann hiermit nicht erreicht werden.

Die der Erfindung zu Grunde liegende Aufgabe besteht darin, die Mittel für den Antrieb, insbesondere für das Ein- und Ausschalten einer Entladevorrichtung, bestehend aus mindestens einer Dosierwalze und einem Förderband, so auszugestalten, daß Betriebsstörungen, beispielsweise hervorgerufen durch Verstopfungs- und Überlastungserscheinungen, zuverlässig ausgeschaltet sind. In Erweiterung der Aufgabenstellung soll eine Entladevorrichtung geschaffen werden, die, unter Erfüllung der gestellten Erfordernisse, vom Fahrersitz des ziehenden Fahrzeugs aus betätigbar ist. Zusätzlich soll aber auch dafür Sorge getragen werden, daß die Entladevorrichtung — unabhängig von der vorerwähnten Betätigungsweise — vom rückwärtigen Bereich des Fahrzeugs aus ohne weiteres ein- bzw. ausschaltbar ist.

Mit den im kennzeichnenden Teil des Hauptanspruchs angegebenen Maßnahmen wird erreicht, daß bei der Inbetriebnahme der Entladevorrichtung zunächst das Förderband dem Antrieb zugeschaltet wird, wärend die Dosierwalzen demgegenüber mit zeitlicher Verzögerung in Drehung versetzt werden. Auf diese Weise wird eine schlagartige Belastung des Förderbandes bei Inbetriebnahme der Dosierwalzen vermieden, so daß es im praktischen Betrieb zu keinen Verstopfungs- bzw. Überlastungserscheinungen kommt.

Bei einer ersten Ausführungsform einer Schaltvorrichtung gemäß der Erfindung (Unteranspruch 2) wird auf konstruktiv einfache Art erreicht, daß bei der Inbetriebnahme der Entladevorrichtung zunächst das Förderband in Betrieb genommen wird, während die Dosierwalzen mit zeitlicher Verzögerung hinzu geschaltet werden. Das Übertragungselement zur Betätigung der den Dosierwalzen zugeordneten Kupplung ist in einem vorgegebenen Bereich gegenüber dem Stellelement relativ beweglich angeordnet. Diese Verbindung kann in der einfachsten Weise beispielsweise durch eine Langlochbolzenverbindung verwirklicht werden.

Mit der Anordnung nach dem Unteranspruch 3 werden gleichzeitig mehrere Vorteile erreicht. Hier sind Übertragungselemente einsetzbar, die lediglich in einer Richtung kräftemäßig beanspruchbar sind (z.B. Seilzüge). Eine besonders vorteilhafte Ausführungsform besteht bei der Verwendung von Seilzügen darin, diese durch Federn, die für das Einrücken der Kupplungen ohnehin erforderlich sind, im Sinne dieser Bewegungsrichtung zu belasten. Wird nunmehr das Stellelement im Sinne einer Betätigung der Kupplungen bewegt, wird zunächst die Kupplung des Förderbandes geschaltet. Das Einrücken der Kupplung für Dosierwalzen erfolgt durch die vorgesehene entriegelbare Sperrvorrichtung schlagartig, was, wie erwünscht, zur Folge hat, daß preiswerte Klauenkupplungen eingesetzt werden können.

Eine mögliche Ausbildung einer Sperrvorrichtung ist in den Unteransprüchen 4 und 5 aufgezeigt.

Im Unteranspruch 6 ist eine vorteilhafte, weil baulich einfache, Anordnung zur Betätigung der Kupplungen wieder gegeben.

Mit den Maßnahmen nach dem Unteranspruch 7 wird erreicht, daß die Übertragungselemente unter Federwirkung einseitig an den Bolzen anliegen und somit den Bewegungsrichtungen des Stellelements folgen können. Befindet sich jedoch das Stellelement in der Endlage, die mindestens einer eingerückten Kupplung entspricht, kann das Übertragungselement durch die vorhandene Ausnehmung unabhängig von der Lage des Stellelements von außen in eine Endlage überführt werden, die der Position dieser Kupplung im ausgerückten Zustand entspricht. Dies besagt mit anderen Worten, daß eine eingerückte Kupplung unabhängig von der Position des Stellelements jederzeit durch « Überspielen » dieser Stellung ausgerückt werden kann. Maßnahmen zur konstruktiven Verwirklichung dieser Möglichkeit sind in den Unteransprüchen 8 bis 10 angeführt.

Zur Erzielung eines hohen Bedienungskomforts wird nach den Unteransprüchen 11 und 12 vorgeschlagen daß das Stellglied Bestandteil eines elektromotorisch antreibbaren Spindeltriebes ist, wobei der motorische Antrieb vom Fahrersitz des ziehenden Fahrzeugs aus fernbetätigbar ist. Hierzu kann beispielsweise ein Steuergerät vorgesehen sein, das entweder am Rahmen des ziehenden Fahrzeugs fest installiert ist und mit einer lösbaren elektrischen Kabelverbindung mit dem gezogenen Fahrzeug verbindbar ist. Eine weitere Möglichkeit besteht darin, die elektrischen Kabelverbindung vom gezogenen Fahrzeug zum ziehenden Fahrzeug nicht lösbar auszugestalten, wobei dann das Steuergerät am ziehenden Fahrzeug leicht lösbar angeordnet ist. Dies hat den Vorteil, daß das ziehende Fahrzeug nicht eigens für den vorgesehenen Einsatzfall ausgerüstet sein muß.

Weitere, für die Erfindung wesentliche Merkmale sowie die daraus resultierenden Vorteile sind der nachfolgenden Beschreibung eines Ausführungsbeispiels der Erfindung an Hand der Zeichnungen zu entnehmen.

Es zeigen :

Figur 1 Ein landwirtschaftlich genutztes Fahrzeug in schematischer Darstellung in Seitenansicht ;

Figur 2 Eine Antriebs- und Schaltvorrichtung in ebenfalls schematischer Darstellung für eine Entladevorrichtung eines Fahrzeuges nach Figur 1 ;

Figur 3 Eine Schaltvorrichtung in Seitenansicht.

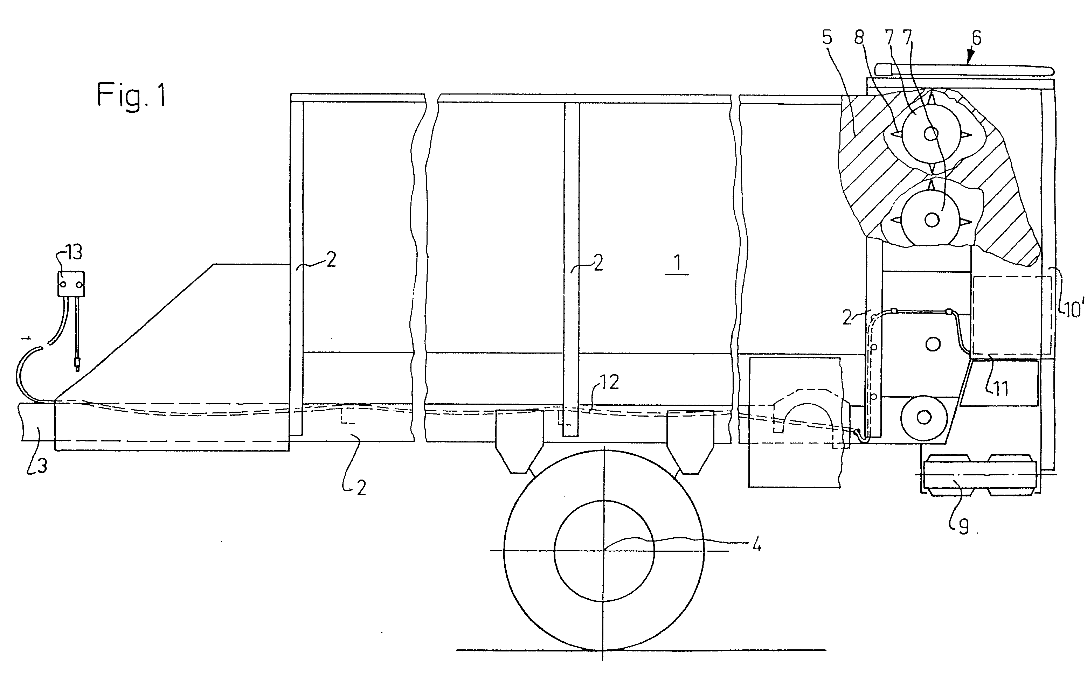

In Figur 1 ist ein landwirtschaftlich genutztes Fahrzeug, ein Erntewagen 1, in schematischer Seitenansicht dargestellt. Der Erntewagen 1 besteht aus Rahmenteilen 2, einer Anhängevorrichtung 3, einer Achse mit Laufrädern 4 und einem Ladeaggregat, daß an der Stirnseite des Wagens angeordnet ist, aber in der Zeichnung selbst nicht dargestellt ist.

Das sich im Laderaum befindliche Erntegut, das durch die schraffierte Fläche 5 schematisch angedeutet ist, wird mit Hilfe einer Entladevorrichtung 6 entladen. Die Entladevorrichtung 6 besteht bei dem dargestellten Ausführungsbeispiel aus drei übereinander liegenden Dosierwalzen 7, von denen lediglich die zwei oberen aus der Zeichnung ersichtlich sind. Die Dosierwalzen sind mit Mitnehmern 8 bestückt, so daß Erntegut bei sich drehenden Dosierwalzen und im Zusammenwirken mit einem Kratzboden, der den Boden des Laderaums des Erntewagens 1 bildet und nicht dargestellt ist, dem Laderaum entnommen und einem unterhalb der Dosierwalzen 7 angeordneten Förderband 9 aufgegeben wird. Eine Rückwand 10 bildet den hinteren Abschluß des Erntewagens 1. Das Erntegut, welches dem Förderband 9 aufgegeben wird, wird — gesehen in Rückansicht des Erntewagens 1 — entweder zu der einen oder anderen Seite hin ausgetragen.

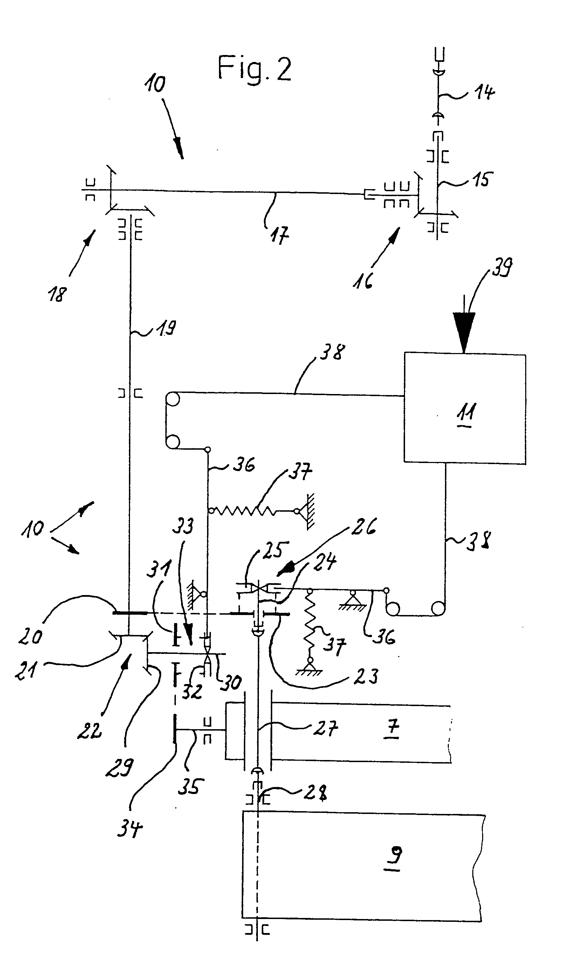

Der Antrieb der Dosierwalzen 7 und des Förderbandes 9 wird über eine Antriebsvorrichtung 10 vorgenommen, wie sie im Einzelnen aus Figur 2 hervorgeht.

Zum Ein- und Ausschalten des Antriebes für die Dosierwalzen 7 und das Förderband 9 ist eine Schaltvorrichtung 11 vorgesehen, die in der Zeichnung als ein, mit gestrichelt gezeichneten Linien wiedergegebenes Rechteck dargestellt ist. Von der Schaltvorrichtung 11 führt eine elektrische Kabelverbindung 12 zu einem Steuergerät 13. Das Steuergerät 13 kann durch eine leicht lösbare Verbindung an einem Bauteil des selbst nicht dargestellten ziehenden Fahrzeuges angeordnet werden.

Eine Entladevorrichtung 6 ist ansich bekannt (vergleiche beispielsweise DE-OS 26 32 060).

In Figur 2 ist in schematischer Darstellung die Antriebsvorrichtung 10 wiedergegeben. Die motorische Antriebsleistung des ziehenden Fahrzeugs wird über eine Gelenkwelle 14, eine Eingangswelle 15, einem ersten Winkeltrieb 16, einer Zwischenwelle 17 und einem zweiten Winkeltrieb 18 auf eine Vorgelegewelle 19 übertragen.

Auf dem in der Zeichnung unten liegenden Ende der Vorgelegewelle 19 ist einmal ein Kettenrad 20 drehfest angeordnet, zum anderen ein Tellerrad 21 eines Winkeltriebes 22. Es liegt somit folgende Leistungsverzweigung vor :

Das Kettenrad 20 steht über eine Antriebskette mit einem weiteren Kettenrad 23 in Verbindung. Das Kettenrad 23 ist einerseits frei drehbar auf einem Antriebswellenstummel 24 gelagert, andererseits kann es über eine Schaltklaue 25 mit den Antriebswellenstummel 24 drehfest verbunden werden. Durch das Kettenrad 23, das mit nicht näher bezeichneten Schaltnocken versehen ist und die Schaltklaue 25, die entsprechende Gegennocken aufweist, wird eine erste, schaltbare Kupplung 26 gebildet. Bei eingerückter Kupplung 26 erfolgt der Antrieb des Förderbandes 9 über eine Gelenkwelle 27 und eine Antriebswelle 28.

Der Aufbau des Leistungszweiges für den Antrieb der Dosierwalzen, von denen in Figur 2 lediglich eine schematisch dargestellt ist, wird auf analoge Weise vorgenommen. Das Tellerrad 21 des Winkeltriebes 22 steht mit einem weiten Tellerrad 29 in kämmender Antriebsverbindung. Das Tellerrad 29 ist drehfest mit einem weiteren Antriebswellenstummel 30 verbunden. Auf dem Antriebswellenstummel 30 ist — analog zum Kettenrad 23 — ein Kettenrad 31 drehbar angeordnet, das über eine Schaltklaue 32 in eine drehfeste Verbindung mit dem Antriebswellenstummel 30 gebracht werden kann. Das Kettenrad 31 und die Schaltklaue 32 bilden eine zweite schaltbare Kupplung 33.

Das Kettenrad 31 steht mit einem weiteren Kettenrad 34 in Antriebsverbindung. Das Kettenrad 34 ist Bestandteil einer Antriebswelle 35 für die Dosierwalze 7.

Zur Betätigung der — in diesem Fall — gleichartig ausgebildeten Kupplungen 26 und 33 sind zweiarmige Schalthebel 36 vorgesehen, die unter der Wirkung von Zugfedern 37 stehen. Die Zugfedern 37 sind ständig bestrebt, die Kupplungen 26 und 33 in ihrem eingerückten Zustand zu halten. An den freien Enden der Schalthebel 36 ist je ein Seilzug 38 angelenkt, die, wie dargestellt zu der Schaltvorrichtung 11 geführt sind. Der mit 39 bezeichnete Pfeil soll andeuten, daß die Schaltvorrichtung sowohl durch das Steuergerät 13 als auch durch andere Schaltmittel beeinflußbar ist.

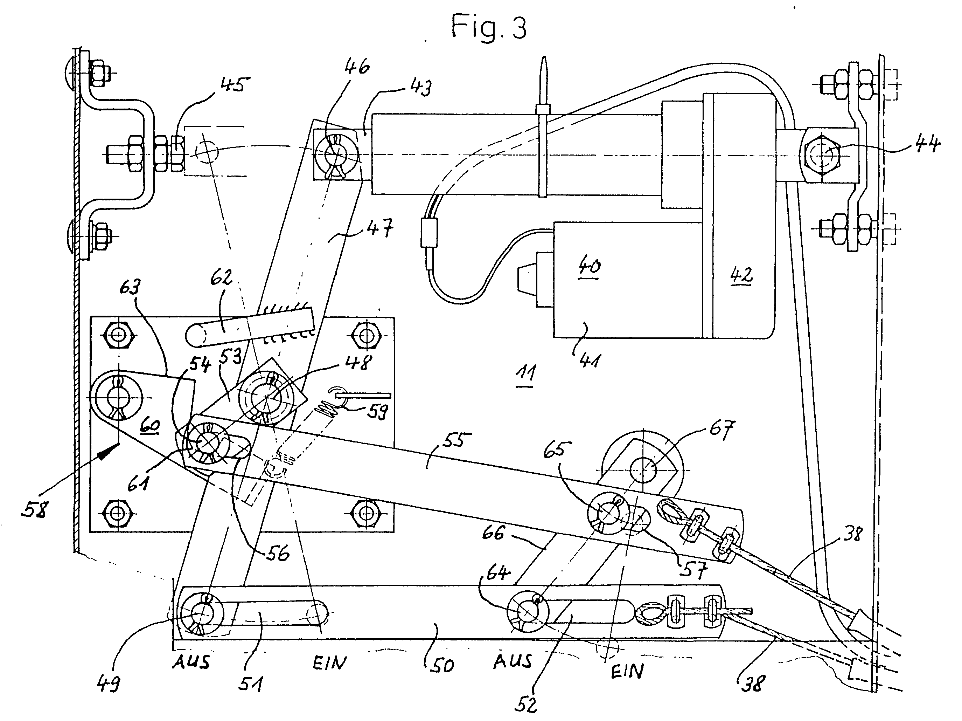

Der prinzipielle Aufbau der Schaltvorrichtung 11 geht im einzelnen auf Figur 3 hervor. Die Schaltvorrichtung 11 dient grundsätzlich dem Zweck der Betätigung der Kupplungen 26 und 33 für das Förderband 9 bzw. die Dosierwalzen 7. Ebenfalls sei angemerkt, daß beim Einschaltvorgang der Entladevorrichtung zunächst das Förderband 9 mit dem Antrieb verbunden werden soll, während die Dosierwalzen 7 mit zeitlicher Verzögerung hinzugeschaltet werden sollen. Schließlich ist noch zu beachten, daß — neben der Fernbetätigung vom ziehenden Fahrzeug aus — die zu schaltenden Kupplungen 26 und 33 — gemeinsam oder unabhängig von einander — vom Heck des gezogenen Fahrzeuges aus ein- bzw. ausschaltbar sein sollen.

Zur Betätigung der Kupplungen 26 und 33 ist ein elektromotorisch antreibbarer Spindeltrieb 40 vorgesehen, der, wie bereits erwähnt, durch das Steuergerät 13 ein- bzw. ausgeschaltet werden kann. Der Spindeltrieb 40 besteht aus einem Hubmotor 41, einem Untersetzungsgetriebe 42 und einem Stellglied 43. Der Hubmotor 41 kann sowohl auf Rechts- als auch auf Linkslauf eingestellt werden.

Der Spindeltrieb 40 ist innerhalb eines Lagers 44 schwenkbeweglich, aber ortsfest angeordnet. Das Stellglied 43 läuft am Ende seiner Verstellbewegung auf einen einstellbaren Anschlag 45 auf.

Das Stellglied 43 ist über eine Bolzen-Gelenkverbindung 46 am in der Zeichnung oben liegenden Ende eines Stellelementes 47 angelenkt. Das Stellelement 47 ist als zweiarmiger Hebel ausgebildet und um eine ortsfeste Schwenkachse 48 schwenkbeweglich angeordnet.

Am in der Zeichnung unten liegenden Ende des Stellelements 47 ist über eine Bolzen-Gelenkverbindung 49 ein Übertragungselement 50 angelenkt. Das Übertragungselement 50 ist, wie dargestellt, aus einem Flacheisenstück gefertigt, an dessen rechtem Ende der Seilzug 38 zur Betätigung der Kupplung 26 befestigt ist. Das Übertragungselement 50 ist mit zwei langlochförmigen Ausnehmungen 51 und 52 versehen, auf deren Zweckbestimmung weiter unten noch näher eingegangen wird.

Auf der Schwenkachse 48 ist ein Koppelglied 53 schwenkbar gelagert. Das Koppelglied 53 ist über einen an ihm befestigten Bolzen 54 mit einem weiteren Übertragungselement 55 gelenkig verbunden. Am Übertragungselement 55 ist, analog zum Übertragungselement 50 das Ende des Seilzugs 38 zur Betätigung der Kupplung 33 befestigt. Ebenfalls sind in dieses Übertragungselement 55 langlochförmige Ausnehmungen 56 und 57 eingelassen, auf deren Zweckbestimmung ebenfalls weiter unten noch näher eingegangen wird.

Aus dem vorstehend gesagten ergibt sich, wobei zunächst die langlochförmigen Ausnehmungen 51 und 56 außer Acht zu lassen sind, daß das Übertragungsgestänge 50 direkt am Stellelement 47 angelenkt ist, während die Anlenkung des Übertragungselementes 55 am Stellelement 47 derart getroffen ist, daß eine Relativbewegung zwischen dem Stellelement 47 und dem Übertragungselement 55 möglich ist.

Das in der Zeichnung links liegende Ende des Übertragungselements 55 kann mittels einer Sperrvorrichtung 58 in einer ortsfesten Lage gehalten werden. Die Sperrvorrichtung 58 besteht bei dem dargestellten Ausführungsbeispiel aus einer schwenkbaren und unter der Wirkung einer Feder 59 stehenden Sperrklinke 60. Die Sperrklinke 60 weist eine nach oben hin geöffnete Fangtasche 61 auf, in die der Bolzen 54 des Kuppelgliedes 53 — bei der dargestellten Endlage des Übertragungselementes 55, die dem ausgerücktem Zustand der Kupplung 26 entspricht — eintaucht. Bei wirksamer Sperrvorrichtung behält demnach das Übertragungselement 55 im wesentlichen die gezeichnete Position bei, selbst wenn das Stellelement 47 — in vorgegebenen Grenzen — eine Schwenkbewegung ausführt.

Mit Hilfe eines Auslösenockens 62, der am Stellelement 47 befestigt ist, kann die Sperrklinke 60 in eine Lage überführt werden, in der die Verriegelung aufgehoben ist. Dies geschieht durch Auflaufen des Auslösenockens 62 auf eine Steuerkante 63 der Sperrklinke 60.

In die langlochförmigen Ausnehmungen 52 und 57 greift je ein Bolzen 64 und 65 ein. Die Bolzen 64 und 65 sind an einem zusätzlichen Stellelement 66 befestigt. Das Stellelement 66 ist drehfest mit einer Welle 67 verbunden, die aus dem Gehäuse der Schaltvorrichtung 11 nach außen geführt ist, das heißt also von außen zugänglich ist. Über diese Welle 67 kann durch manuellen Eingriff seitens der Bedienungsperson das zusätzliche Stellelement 66 z.B. durch einen Handhebel verschwenkt werden. Da die Schaltvorrichtung 11 am Heck des Erntewagens 1 an einer der seitlichen Wandungen angeordnet ist, ist somit eine weitere Betätigungsmöglichkeit für die Kupplungen 26 und 33 — unabhängig vom Steuergerät 13 — im rückwärtigen Bereich des Erntewagens gegeben.

Die vorstehend beschriebene Schaltvorrichtung 11 arbeitet wie folgt :

In der dargestellten Ausgangsposition befindet sich die Stellelemente 47 und 66 in ihrer Stellung « AUS ». Dies bedeutet, daß beiden Kupplungen 26 und 33 ausgerückt sind. Bevor die Entladevorrichtung in Betrieb genommen werden kann, muß das Stellelement 66 seitens der Bedienungsperson — vom Heck des Erntewagens aus — in seine Stellung « EIN » überführt werden. Diese Lage ist durch einestrichpunktierte Linie wiedergegeben. Bei diesem Einstellvorgang wird weder die Kupplung 26, noch die Kupplung 33 betätigt. Dies deswegen, da einerseits durch die langlochförmigen Ausnehmungen 52 und 57 eine Relativbewegung des Stellelements 66 in Bezug auf die Übertragungselemente 50 und 55 möglich ist und, da sich andererseits das Stellelement 47 noch in seiner Ausgangsposition « AUS » befindet. Die vorstehend beschriebenen Voraussetzungen zur Inbetriebnahme der Entladevorrichtung sind aus sicherheitstechnischen Gründen von Vorteil.

Für das dosierte Entladen von Erntegut z.B. zum Befüllen eines Fahrsilos werden die Kupplungen 26 und 33 vom Fahrersitz aus über das Steuergerät 13 ein- oder ausgeschaltet. Durch Ausfahren des Stellgliedes 43 wird das Stellelement 47 entgegen dem Uhrzeigersinn verschwenkt. Das Übertragungselement 50 folgt, da es unter der Wirkung einer der Federn 37 steht, unmittelbar dieser Verstellbewegung. Dies hat zur Folge, daß die dem Förderband 9 zugeordnete Kupplung 26 verzögerungsfrei geschaltet wird.

Anders liegen die Verhältnisse hinsichtlich des Übertragungselementes 55. Dieses wird so lange in seiner dargestellten Position gehalten, bis die Wirkung der Verriegelungsvorrichtung 58 — auf vorerwähnte Weise — aufgehoben ist. Ist dies der Fall, wird die Kupplung 33 für den Antrieb der Dosierwalzen 7 mit der eingetretenen zeitlichen Verzögerung eingerückt. Das Stellglied 43 läuft am Ende seiner Verstellbewegung auf den einstellbaren Anschlag 45 auf.

Das Ausrücken der Kupplungen 26 und 33 erfolgt durch Einfahren des Stellgliedes 43, wobei die Übertragungselemente 50 und 55 in die gezeichnete Ausgangsposition überführt werden. Die federbelastete Sperrklinke 60 stellt erneut die Verriegelung des Übertragungselements 55 sicher.

Selbst bei ausgefahrenem Stellglied 43, das heißt bei betätigten Kupplungen 26 und 33, kann diese Antriebsverbindung durch einen manuellen Eingriff seitens der Bedienungsperson vom Heck des Erntewagens aus jederzeit unterbrochen werden. Hierzu wird lediglich das Stellelement 66 in die dargestellte Ausgangsposition « AUS » überführt. Die die langlochförmigen Ausnehmungen 52 und 57 durchgreifenden Bolzen 64 und 65 bewirken in diesem Fall eine Mitnahme der Übertragungselemente 50 und 55, so daß die Kupplungen 26 und 33 ausgerückt werden. Die Position des Stellelementes 47 in seiner Stellung « EIN » bleibt unberührt da die langlochförmigen Ausnehmungen 51 und 56 eine Relativbewegung der Übertragungselemente 50 und 55 in Bezug auf das Stellelement 47 ermöglichen.

Der vom Fahrersitz aus eingestellte « Sollwert » kann also jederzeit seitens der Bedienungsperson vom Heck des Erntewagens aus « überspielt » werden. Dies ist vor allem dann von großem Vorteil, wenn das Erntegut bei stehendem Wagen entladen wird, so daß die Bedienungsperson den Entladevorgang optimal regeln kann. Es ist auch möglich, statt eines einzigen Stellelements 66 zwei voneinander unabhängig betätigbare Stellelemente vorzusehen, so daß auch nur die eine der Kupplungen 26, 33 ein- bzw. ausgerückt werden kann. Neben dem Vorteil der besseren Überwachung des Entladevorgangs durch die geschilderte zusätzliche Eingriffsmöglichkeit seitens der Bedienungsperson wird mit dieser Anordnung in besonderem Maß der Forderung nach einer möglichst großen Betriebssicherheit Rechnung getragen.

**Ansprüche**

1. Landwirtschaftlich genutztes Fahrzeug mit einer Ladefläche, insbesondere ein Erntewagen, mit einer Antriebs- (10) und Schaltvorrichtung (11) für eine Entladeeinrichtung (16), bestehend aus mindestens einer zwischen seitlichen Wandungen des Fahrzeugs drehantreibbar gelagerten Dosierwalze (7) und einem unterhalb dieser Dosierwalze (7) angeordneten, sich quer zur Fahrtrichtung erstreckenden Förderband (9), dem das von der Dosierwalze erfaßte Ladegut (5) aufgegeben und — bezogen auf den Fahrzeugquerschnitt — zur einen oder anderen Seite hin in dosierter Menge entladen wird, wobei die Antriebsvorrichtung (10) zwei schaltbare Kupplungen (26, 33) aufweist, über die eine Antriebsverbindung zur Dosierwalze (7) und dem Förderband (9) herstellbar bzw. unterbrechbar ist, dadurch gekennzeichnet, daß die Schaltvorrichtung (11) zur Betätigung der Kupplungen (26, 33) ein Stellelement (47) aufweist, an dem mit den Kupplungen (26, 33) in Verbindung stehende Übertragungselemente (50, 55) derart angelenkt sind, daß in der Bewegungsrichtung der Einschaltbewegung, zuerst eine Betätigung der dem Förderband (9) zugeordneten Kupplung (33) erfolgt, während die der Dosierwalze (7) zugeordnete Kupplung (26) demgegenüber mit zeitlicher Verzögerung betätigbar ist.

2. Landwirtschaftlich genutztes Fahrzeug nach Anspruch 1, dadurch gekennzeichnet, daß das Stellelement (47) aus einem zweiarmigen, um eine ortsfeste Schwenkachse (48) schwenkbeweglich gelagerten Hebel gebildet ist, an dessen einem Hebelarm ein Stellglied (43) angelenkt ist und an dessen anderen Hebelarm zum einen ein erstes Übertragungselement (50) unmittelbar und zum anderen ein zweites Übertragungselement (55) in einer, eine Relativbewegung zwischen diesem zweiten Übertragungselement (55) und dem Stellelement (47) zulassenden Weise angelenkt ist.

3. Landwirtschaftlich genutztes Fahrzeug nach Anspruch 2, dadurch gekennzeichnet, daß das zweite Übertragungselement (55) über ein Koppelglied (53) am Stellelement (47) schwenkbeweglich angelenkt ist und daß das zweite Übertragungselement (55) durch eine entriegelbare Sperrvorrichtung (58) in einer ortsfesten, jedoch einer, eine Relativbewegung des Stellelementes (47) in Bezug auf das zweite Übertragungselement (55) zulassenden Weise, feststellbar ist.

4. Landwirtschaftlich genutztes Fahrzeug nach Anspruch 3, dadurch gekennzeichnet, daß die Sperrvorrichtung (58) aus einer federbelasteten Sperrklinke (60) gebildet ist, die durch einen Auslösenocken (62) des Stellelements (47) in eine, das zweite Übertragungselement (55) freigebende Stellung überführbar ist.

5. Landwirtschaftlich genutztes Fahrzeug nach Anspruch 4, dadurch gekennzeichnet, daß die Sperrklinke (60) eine offene Fangtasche (61) zur Aufnahme eines Bolzens (54) aufweist, wobei dieser am Koppelglied (53) befestigt ist und das zweite Übertragungselement (55) durchgreift.

6. Fahrzeug nach den Ansprüchen 1 und 2, dadurch gekennzeichnet, daß zum Ein- bzw. Ausrücken der Kupplung (26 bzw. 33) ein ortsfest schwenkbar gelagerter Hebel (36) vorgesehen ist, an dem einenends eine Feder (37) angreift und anderenends das zugehörige Übertragungselement (50 bzw. 55) — gegebenenfalls über ein zusätzliches Zwischenglied (38) befestigt ist.

7. Fahrzeug nach den Ansprüchen 1, 2 und 5, dadurch gekennzeichnet, daß die Übertragungselemente (50, 55) mit Ausnehmungen (51, 56) versehen sind, die jeweils von einem Bolzen (49 bzw. 54) durchsetzt sind.

8. Fahrzeug nach den Ansprüchen 1 und 2, 6 und 7, dadurch gekennzeichnet, daß die Übertragungselemente (50, 55) zusätzliche Ausnehmungen (52, 57) aufweisen, die von weiteren Bolzen (64, 65) durchsetzt sind, die Bestandteile mindestens eines zusätzlichen Stellelements (66) sind.

9. Fahrzeug nach Anspruch 8, dadurch gekennzeichnet, daß für jedes Übertragungselement (50, 55) ein zusätzliches Stellelement vorgesehen ist.

10. Fahrzeug nach Anspruch 9, dadurch gekennzeichnet, daß die Stellelemente im rückwärtigen Bereich des Fahrzeugs — von außen zugänglich — angeordnet sind.

11. Fahrzeug nach den Ansprüchen 1 und 2, dadurch gekennzeichnet, daß das Stellglied (43) Bauteil eines elektromotorisch antreibbaren Spindeltriebs (40) ist.

12. Fahrzeug nach Anspruch 11, dadurch gekennzeichnet, daß der elektromotorische Antrieb über ein vom Fahrersitz des ziehenden Fahrzeugs aus betätigbares Steuergerät (13) ein- bzw. ausschaltbar ist.

## Claims

1. Vehicle for agricultural use with a loading platform, particularly a harvesting vehicle, with power take-off (10) and control mechanism (11) for an unloading device (6) consisting of a least one rotary driven metering drum (7) located between the lateral walls of the vehicle and a conveyor belt (9) located below this metering drum (7) and extending perpendicular to the driving direction, which is charged with the loading material (5) picked up by the metering drum and discharges the former to one side or the other — in relation to the vehicle cross-section — in a metered quantity, whereby the power take-off (10) has two shiftable clutches (26, 33) by means of which the drive connection to the metering drum (7) and the conveyor belt (9) can be made or interrupted and is provided with a control mechanism (11) for actuation of the clutches (26, 33) with a positioning component (47) to which transfer elements (50, 55) in connection with the clutches (26, 33) are coupled so that when moved in the direction to engage the clutch (33) associated with the conveyor belt (9) is actuated first while the clutch (26) associated with the metering drum (7) can be actuated in a delayed manner in relation to the former.

2. Vehicle for agricultural use according to claim 1 distinguished by the fact that the positioning component (47) is formed of a lever consisting of two arms and mounted in a stationary pivot-ing shaft (48) in such a manner that it is capable of a pivot-ing motion, on the one lever arm of which a positioning component (43) is coupled and on the other lever arm of which on the one hand a first transfer element (50) is coupled directly and on the other hand a second transfer element (55) is coupled in such a manner to allow a relative movement between this second transfer element (55) and the positioning component (47).

3. Vehicle for agricultural use according to claim 2 distinguished by the fact that the second transfer element (55) is coupled to the positioning component (47) over a clutch component (53) to allow a pivot-ing motion and that the second transfer element (55) can be locked in place by a releaseable locking device (58) in such a manner that it is stationary while still allowing a relative motion of the positioning component (47) in relation to the second transfer element (55).

4. Vehicle for agricultural use according to claim 3 distinguished by the fact that the locking mechanism (58) is formed of a detent pawl (60) unter spring tension which can be moved to a position to release the second transfer element (55) by means of a release cam (62) on the positioning component (47).

5. Vehicle for agricultural use according to claim 4 distinguished by the fact that the detent pawl (60) has an open catch pocket (61) to receive a bolt (54) whereby the latter is attached to the coupling component (53) and extends through the second transfer element (55).

6. Vehicle according to claims 1 and 2 distinguished by the fact that a stationary lever (36) mounted in a manner to allow a pivot-ing motion is provided for engaging and disengaging the clutch (26 or 33), in which a spring (37) engages on the one end and upon which the associated transfer element (50 or 55) is attached — where applicable over an additional intermediate element (38).

7. Vehicle according to claims 1, 2 and 5 distinguished by the fact that the transfer elements (50, 55) are provided with recesses (51, 56) each of which is interspersed with a bolt (49 or 54).

8. Vehicle according to claims 1 and 2, 6 and 7, distinguished by the fact that the transfer elements (50, 55) are provided with additional recesses (52, 57) which are interspersed by additional bolts (64, 65), which are components of at least one additional positioning component (66).

9. Vehicle according to claim 8 distinguished by the fact that an additional positioning element is provided for each transfer element (50, 55).

10. Vehicle according to claim 9 distinguished by the fact that the positioning components in the rear area of the vehicle are arranged in such a manner that they are externally accessible.

11. Vehicle according to claims 1 and 2 distinguished by the fact that the positioning component (43) is a component of a spindle drive (40) driven by an electric motor.

12. Vehicle according to claim 11 distinguished by the fact that the electric motor drive can be switched on an off by means of a control unit (13) which can be actuated from the driver's seat of the pulling vehicle.

## Revendications

1. Véhicule à usage agricole comprenant une surface de chargement, notamment chariot pour la moisson, comprenant un dispositif d'entraînement (10) et un dispositif de commutation (11) pour un dispositif de déchargement (6), formés d'au moins un cylindre de dosage (7) monté rotatif entre les parois latérales dudit véhicule et d'un convoyeur à bande (9) disposé en dessous desdits tambours doseurs (7) et s'étendant transversalement au sens de déplacement, auquel les produits à décharger (5) entraînés par le cylindre de dosage précité, sont transmis puis déchargés en quantités dosées d'un côté ou de l'autre par rapport à la section transversale du véhicule, le dispositif d'entraînement (10) comprenant deux accouplements débrayables (26, 33) par l'intermédiaire desquels on peut réaliser ou interrompre une jonction d'entraînement le tambour doseur (7) ou le convoyeur à bande (9), caractérisé en ce que le dispositif de commutation (11) pour actionner les accouplements (26, 33) comprend un élément de manœuvre (47) sur lequel sont articulés des éléments de transmission (50, 55) reliés auxdits accouplements (26, 33) de telle manière que dans le sens de déplacement du mouvement de mise en marche, soit tout d'abord réalisée la commande de l'accouplement (33) associé au convoyeur à bande (9) tandis que l'accouplement (26) associé au tambour de dosage (7) est actionné par rapport au précédent, avec une certaine durée de temporisation.

2. Véhicule à usage agricole selon la revendication 1, caractérisé en ce que l'élément de manœuvre (47) est formé d'un levier à deux bras monté pivotant autour d'un axe de pivotement (48) fixe, sur le premier bras duquel est articulé un organe de manœuvre (43) tandis que sur son autre bras de levier sont articulés d'une part un premier élément de transmission (50), qui est articulé directement, et d'autre part, un second élément de transmission (55), monté pour sa part d'une manière qui permet un mouvement relatif entre ledit second élément de transmission (55) et l'élément de manœuvre (47).

3. Véhicule à usage agricole selon la revendication 2, caractérisé en ce que le second élément de transmission (55) est articulé de manière pivotante par l'intermédiaire d'un organe d'accouplement (53), à l'élément de manœuvre (47) et en ce que le second élément de transmission (55) peut être arrêté, à l'aide d'un dispositif de verrouillage (58) déverrouillable, dans une position fixe, qui permet toutefois un mouvement relatif de l'élément de manœuvre (47) par rapport audit second élément de transmission (55).

4. Véhicule à usage agricole selon la revendication 3, caractérisé en ce que le dispositif de verrouillage (58) est formé d'un cliquet d'arrêt (60) sollicité par un ressort qui peut être amené, par une came de déclenchement (62) de l'élément de manœuvre (47), dans une position assurant le dégagement du second élément de transmission (55).

5. Véhicule à usage agricole selon la revendication 4, caractérisé en ce que le cliquet d'arrêt (60) présente une poche de réception ouverte (61) pour recevoir un tourillon (54), ce dernier étant fixé sur l'organe d'accouplement (53) et traversant ledit second élément de transmission (55).

6. Véhicule selon les revendications 1 et 2, caractérisé en ce que pour embrayer et débrayer l'accouplement (26, 33) on a prévu un levier (36) monté pivotant en un emplacement fixe, sur lequel vient en prise à une extrémité, un ressort (37) tandis qu'à son autre extrémité est fixé l'élément de transmission associé (50 ou 55), le cas échéant par l'intermédiaire d'un organe intermédiaire (38) supplémentaire.

7. Véhicule selon les revendications 1, 2 et 5, caractérisé en ce que les éléments de transmission (50, 55) comprennent des évidements (51, 56) qui sont respectivement traversés par un tourillon (49, 54).

8. Véhicule selon les revendications 1, 2, 6 et 7, caractérisé en ce que les éléments de transmission (50, 55) présentent des évidements supplémentaires (52, 57) qui sont traversés par d'autres tourillons (64, 65) qui constituent des pièces d'au moins un élément de manœuvre (66) supplémentaire.

9. Véhicule selon la revendication 8, caractérisé en ce que pour chaque élément de transmission (50, 55) on a prévu un élément de manœuvre supplémentaire.

10. Véhicule selon la revendication 9, caractérisé en ce que les éléments de manœuvre sont disposés à la partie arrière dudit véhicule, en étant accessibles de l'extérieur.

11. Véhicule selon les revendications 1 et 2, caractérisé en ce que l'organe de manœuvre (43) est une partie d'une commande par broche (40) pouvant être entraînée par un moteur électrique.

12. Véhicule selon la revendication 11, caractérisé en ce que l'entraînement par moteur électrique peut être mis en marche et arrêté par l'intermédiaire d'un appareil de commande (13) actionné à partir du siège du conducteur du véhicule tracteur.

Fig. 1

0 010 511

# Fig. 2

# Fig. 3

AUS  EIN  AUS  EIN

0 010 511